# EUROPEAN PATENT APPLICATION

(11) **EP 4 387 196 A1**
(43) Date of publication of application: **19.06.2024**
(21) Application number: 22383209.8
(22) Date of filing: 13.12.2022
(51) Int. Cl.: H04L 49/1515

(54) **SYSTEM AND METHOD FOR CONNECTING COMPLETE INTERCONNECTION NETWORKS FOR HIGH-PERFORMANCE COMPUTERS**

(71) Applicant: Barcelona Supercomputing Center-Centro Nacional de Supercomputación, 08034 Barcelona (ES); Universidad de Cantabria, 39005 Santander (ES)
(72) Inventor: VALERO CORTÉS, Mateo, 08034 Barcelona (ES); BEIVIDE PALACIO, Julio Ramón, 39005 Santander (ES); CAMARERO COTERILLO, Cristóbal, 39005 Santander (ES); MARTÍNEZ FERNÁNDEZ, Carmen, 39005 Santander (ES); VALLEJO GUTIÉRREZ, Enrique, 39005 Santander (ES)
(74) Representative: TRBL Intellectual Property

(57) **Abstract**

The present invention relates to a system for linearly connecting a Complete Interconnection Network, CIN, in which there is a link between any pair of switches, wherein the CIN comprises a plurality of servers arranged in a plurality of server groups; each server group is connected to a connection switch, with enough ports as to be connected to the remainder of switches; connection switches are aligned consecutively over substantially the same dimension; and, only ports with the same index number, that occupy the same position in different pairs of switches, can be connected. Advantageously, in this way, wires are grouping in parallel sets or guides and wherein the wire connections are arranged without crossings between said parallel guides. The invention can also be advantageously applied to hierarchical and multi-dimensional networks built upon CINs, either per network layer or per dimension, respectively, using additional horizontal dimensions (X, Y) for deploying parallel hoses of wires, arranged without crossings. The invention further relates to a couple of methods for building the disclosed system.

## Description

### FIELD OF THE INVENTION

The present invention belongs to the field of the design and deployment (also referred to as layout) of the wire arrangement used by interconnection networks in high-performance computing (HPC) systems, such as Dragonflies, Dragonflies+, Flattened Butterflies and HyperX and, in general, in any network whose topology is built upon Complete graphs. The invention can be used also in the layout of Network-on-Chip (NoC) topologies using Complete graphs or variants thereof.

### BACKGROUND OF THE INVENTION

Interconnection networks are present in any computing platform, and are considered critical in computer engineering. With the expansion of telecommunications and the Internet, modern communication infrastructures have grown increasingly complex and, as a result, more costly to install, setup, repair and maintain. For the case of HPC supercomputers and data centers, these systems typically include not only large numbers of routers (or switches), servers, and the like, but also complex interconnection networks configured to establish data communication between the different components of said infrastructures.

In this context, the time and cost associated with the proper wiring of an HPC system, data center or other large communication infrastructure makes any wiring mistakes, as well as potential malfunctioning errors, extremely difficult to detect inside the wiring topology. As a result, any process aimed to investigate and resolve such errors becomes a complex and costly task, both in time and resources.

Interconnection networks are built around switches, which are the devices that guide the flow of data. Data are generated and consumed by computing elements: servers in the case of system networks and cores in the case of NoCs. Switches are composed of ports, and ports of different switches are connected by links (or wires) in specific ways, thereby determining the interconnection network topology. The degree of a switch denotes its number of ports.

Choosing a convenient interconnection layout for a communication network becomes also very valuable for specific topologies, since it is known that certain arrangements of servers can be more effective at certain types of computational tasks than others. Moreover, the advent of large-degree switches has enabled the possibility of using Complete graphs for interconnection networks with a moderate number of servers. In a Complete graph, every pair of vertices is connected by a link. Networks connected using a Complete graph are denoted in this invention as Complete Interconnection Networks (CINs). In this context, a CIN of N switches can be understood as a fabric allowing to communicate any pair of switches by traversing just one link (wire connection). To do that, switches must have at least N-1 ports, and every switch is connected to the remainder N-1 switches. The underlying topology of a CIN of N switches can be topologically viewed as a Complete graph, K_{N}, which requires N-1+N-2+...+2+1 = N(N-1)/2 links or wires. For example, with regular 64-port switches, a CIN can be built based on a Complete graph K₃₂, with 32 switches equipping 1024 servers (32 servers per switch) and employing 496 (32x31/2) wires. The switches employ 63 ports: 32 for connecting servers and 31 to connect to other switches.

Larger deployments, with a higher number of servers, require either hierarchical or multi-dimensional topologies based on CINs, such as Dragonfly, Dragonfly+ and Flattened Butterfly (or HyperX) networks. Dragonfly networks are hierarchical interconnection networks in which servers and switches are organized in multiple groups, interconnected to each other using a global network. Typical Dragonflies are based on CINs, both for the local topologies of their groups and for the global network. Dragonfly+ is similar, but it employs a CIN for the global network, and not for the local topology per group. Flattened Butterfly (or HyperX) networks are Cartesian graph products of Complete graphs, this is, they employ CINs in each of their dimensions. As an example of these connection topologies, patent documents US 8,285,789 B2 and US 9,614,786 B2 disclose different embodiments of a Flattened Butterfly processor interconnect network and a Dragonfly processor interconnect network, respectively. These networks are both based, partly or totally, on CINs. In the Cartesian representation of a 2D Flattened Butterfly each row and column is a CIN, and the same occurs with other dimensions in multi-dimensional Flattened Butterflies. On the other hand, in a Dragonfly each group is a CIN, while in Dragonfly and Dragonfly+ networks each whole group can be seen as a single switch in a global CIN.

Regarding other known techniques for defining computing network architectures, document WO 2019/033220 A1 refers to several methods and systems for rearranging the network topology of an interconnection network. Data is transmitted along at least one of a plurality of output ports based on a first port map, wherein the first port map links at least one of a plurality of input ports to at least one of the output ports. A request to apply a second port map, different from the first port map, is received. A circuit-switched element is activated to link at least one of the plurality of input ports to at least one of the plurality of the output ports based on the second port map. The data is transmitted along the at least one of the plurality of output ports based on the second port map.

Document US 9,989,724 B2 relates generally to communication networks, and more particularly to data center networks with improved interconnections and improved interconnection management. More specifically, this document refers to data center networks having one or more data center rows, where each row has one or more racks, and each rack has one or more network devices, such as servers, storage devices and switches. The rows and racks are interconnected by a fiber interconnect core that reduces the number of switching nodes in the data center network, and reduces the individual path latency, the overall data center network cost, power consumption, and power and cooling requirements.

Document US 7,613,177 B1 discloses a method for adding stages to a scalable switching network. More specifically, this document discloses that extra stages can be added to a switching network to provide pathwise redundancy for fault tolerance, and to alleviate traffic blocking. Also, the addition of extra stages can alleviate the loss of pathwise redundancy when the width of switching networks is increased. With this aim, an in-service method for upgrading a switching network is proposed, based on the addition of stages that allows the addition of redundancy to an existing network, without the need to take the network out of service.

However, none of the above documents provide a solution to the problem of how to design optimized layouts that efficiently reduce the complexity of the interconnection wiring network, thereby achieving layouts which are easier to install, repair and replace compared to the known alternatives, without incurring in higher time and resource costs.

The present invention is aimed at solving the aforementioned problem, by proposing a novel system and a method for connecting Complete Interconnection Networks of high-performance computers. The invention further discloses different embodiments of "Linearly Arranged CINs" (hereafter, LACINs), which allow organizing the network wires of a CIN by means of the use of parallel guides for grouping sets of individual wires, avoiding any guide crossing. The invention can also be advantageously applied to hierarchical and multi-dimensional networks, as the ones described above, either per network layer or per dimension, respectively.

### SUMMARY OF THE INVENTION

In order to solve the problems described in the preceding section, a first object of the invention relates to a system for connecting a Complete Interconnection Network, CIN, wherein:
- the CIN comprises a plurality of servers arranged in a plurality of server groups;
- each server group is connected to a switch, wherein each switch comprises a plurality of ports comprising, in turn, at least a first port group for connecting the switch to a server group, and a second port group for connecting two server groups connected to different switches;
- switches are aligned along a dimension with their second port group substantially aligned in said dimension; such dimension is denoted V when switches are vertically stacked, and as X or Y when switches are arranged in a horizontal dimension.

Advantageously in the system of the invention, each port in the second port group of every switch is connected to the same port in the second port group of a different switch, by means of a wire connection. Consequently, for any pair of switches, only pairs of ports that occupy identical positions (i.e., having the same index number) are connected. Moreover, the wire connections connecting the ports of different switches are arranged in sets or guides of wires along the dimension in which switches are aligned, such that the wire sets do not cross, forming a Linearly Arranged CIN (LACIN). A LACIN of N switches will preferably use N-1 parallel sets or guides containing N/2 individual wires each when N is even, and N parallel guides containing (N-1)/2 individual wires each when N is odd.

For a large number of servers, the layout design according to the invention can be less costly in terms of wire length compared to the known alternatives in the art, due to the avoidance of wire crossings between the wire connections. Additionally, it does not add topological complexity to the terminal or connector requirements. Moreover, the proposed methodology ensures that the connections are deployed without crossings between guides of wires. Thus, the invention substantially reduces wire complexity (which can be an important problem in networks made of hundreds or thousands of servers) compared to the prior art and relaxes the need of applying wire labelling and coloring, as well as simplifying the operations of server replacement or repair inside the network.

Within the scope of interpretation of the present invention, the word "crossing" will be understood, preferably, as a crossing in one projection plane formed by the switches along the dimension in which switches are aligned, with or without physical contact between the crossed wires.

In a further preferred embodiment of the invention, the CIN has a number of switches that is a power of two and, for a numbering of the switches and their ports, every pair of switches is linked through a single wire that connects a pair of ports whose index number is the bitwise exclusive-or operation of the index numbers of the switches being connected.

In a further preferred embodiment of the invention, the CIN forms part of a larger interconnection network which is not CIN, but a topology in which wire connections are grouped as a CIN. This configuration is considered advantageous for its application to known highly complex networks, wherein the optimization of wire connections is considered highly valuable.

In a more preferred embodiment of the invention, the topology is a 3-dimensional HyperX or Flattened Butterfly and comprises a lineal or matrix array of server racks arranged in substantially horizontal dimensions (X, Y), and, wherein each server rack comprises one or more server groups connected each to a connection switch composing a LACIN in a dimension (V).

In a more preferred embodiment of the invention, the topology comprises at least one of the following networks: Dragonfly, Dragonfly+, Flattened Butterfly, HyperX.

In a further preferred embodiment of the invention, the inter-rack wires that connect ports in a set are bundled together in hoses. This configuration is considered advantageous for further reducing the complexity of the interconnection networks. Preferably, the connections grouped in hoses correspond to wire connections between switches of different racks at ports with same offset or index number. More preferably in the invention, the wires or the hoses can also be labelled by text or by coloring, thus further simplifying their identification during repair, substitution or maintenance operations.

In a further preferred embodiment of the invention, the interconnection topology is 1-dimensional, 2-dimensional or 3-dimensional.

In a further preferred embodiment of the invention, at least two switches are arranged in a server rack.

In a further preferred embodiment of the invention, the wire connections between the server racks are arranged underfloor or aerially substantially along at least a horizontal dimension (X, Y).

In a further preferred embodiment of the invention, at least a switch further comprises extra fault-tolerance or upgrading ports; and/or at least a server group and a switch are integrated in a printed circuit board, PCB. These configuration options are considered advantageous for their application to current server rack switches, which typically allow for extra connection ports which can provide for further functionalities, or which are integrated in PCBs according to known standard technologies usually found in the industry of server rack technologies.

In a further preferred embodiment of the invention, the CIN is implemented as a Network-on-Chip. This configuration is considered advantageous for the chip industry, where an optimized layout of wire connections is considered highly valuable for the reduction of costs related to the chip manufacturing processes.

In a further preferred embodiment of the invention:
- at least a server group is connected to a connection switch through injection/ejection ports;
- at least a switch further comprises extra fault-tolerance or upgrading ports; and/or
- at least a server group and a switch are integrated in a printed circuit board, PCB.

A second object of the invention relates to a method for connecting a Complete Interconnection Network, CIN, or a CIN portion of an interconnection network, in a system according to any of the preceding claims, comprising the following steps:
- arranging a plurality of servers in server groups,
- connecting each server group to a switch, wherein each switch comprises a plurality of ports comprising, in turn, at least a first port group for connecting the switch to a server group, and a second port group for connecting two server groups connected to different switches;
- switches are aligned along a dimension with their second port group substantially aligned in said dimension; whereon such dimension is denoted V when switches are vertically stacked, and as X or Y when switches are arranged in a horizontal dimension.

Advantageously in the invention, each port in the second port group of every switch is connected to the same port in the second port group of a different switch, by means of a wire connection. Consequently, for any pair of switches, only pairs of ports that occupy identical positions (having the same index number) are connected. Moreover, the wire connections connecting the ports of different switches are arranged in sets or guides of wires along the dimension in which switches are aligned, such that the wire sets do not cross. When using N switches, the method induces the use of N-1 parallel sets or guides containing N/2 individual wires each when N is even, and N parallel guides containing (N-1)/2 individual wires each when N is odd.

Specific objects and preferred embodiments of the invention refer to the claims submitted with the present document.

### BRIEF DESCRIPTION OF DRAWINGS

Figures 1a-1b show, respectively, a LACIN layout of a Complete graph K₁₀ and its corresponding connection matrix, according to a preferred embodiment of the invention.
Figures 2a-2b show, respectively, a LACIN for a Complete graph Ks with a XOR-based layout and its connection matrix, according to a preferred embodiment of the invention.
Figures 3a-3b show, respectively, a LACIN layout of odd size built from the next even number (actually from Figures 2a-2b) and removing the last switch and its links, and its connection matrix, according to a preferred embodiment of the invention.
**Figure 4** shows a rack containing the dimension (V) of a 4 × 4 × 4 HyperX (or Flattened Butterfly) with a XOR-based layout, according to a preferred embodiment of the invention.
**Figure 5** shows a XOR-based LACIN layout for horizontal dimensions X and Y of the 4 × 4 × 4 HyperX of Figure 4. This bundle lay-out is used for the inter-rack connection of the network by means of super-ports, according to a preferred embodiment of the invention. Super-ports can be seen as sockets composed of individual ports that connect the set of wires included in a hose.
**Figure 6** shows a larger arrangement according to a preferred embodiment of the invention, based on a three-dimensional (3D) HyperX network comprising an array of 16 × 16 server racks arranged in two (X, Y) dimensions, according to a preferred embodiment of the invention.
**Figure 7** shows a rack plane distribution of the vertical (V) dimension of the 3D HyperX network presented in Figure 6, according to a preferred embodiment of the invention, wherein each rack plane represents a printed circuit board (PCB). The rack comprises sixteen switches (SWITCH-PCB₀...SWITCH-PCB₁₅), and each switch comprises sixteen injection/ejection ports (I₀...I₁₅), fifteen V-ports (V₀...V₁₄), fifteen X-ports (X₀...X₁₄) and fifteen Y-ports (Y₀...Y₁₄). Each rack implements a 16 switch LACIN.
**Figure 8** shows the LACIN bundle connections of super-ports between racks in the X and Y dimensions of the 3D HyperX shown in Figure 6, according to a preferred embodiment of the invention.

### DETAILED DESCRIPTION OF THE INVENTION

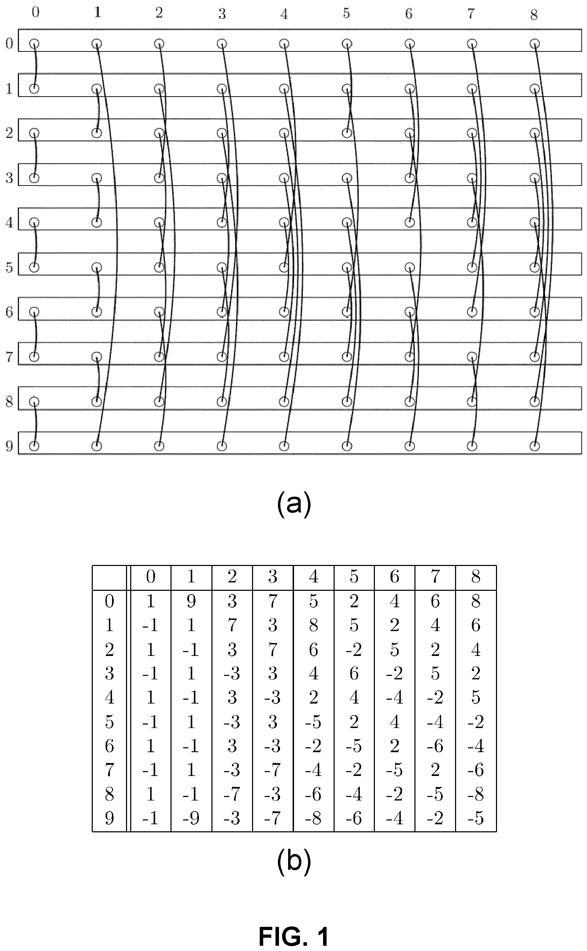

A set of five preferred embodiments of the invention, shown in Figures 1-8, will be now described for illustrative and not limiting purposes.

### Example 1:

A first example of the invention is shown in Figure 1, and relates to a CIN having an even number of switches (hereafter referred to as "*size*")*.* As there is a link between every pair of switches, the diameter (maximum number of hops between any pair of switches) of a CIN of any *size* is 1. To implement the CIN, the switch will have *size*-1 ports to connect to the other *size*-1 switches. Thus, the number of required links for the CIN will be *size* × (*size* - 1)/2. The way in which these links are arranged is denoted here as the layout of the CIN.

For simplifying the CIN layout, a LACIN only connects pairs of switches through ports having the same offset so located at the same horizontal (H) position. Thus, the wires are organized in parallel guides in the vertical (V) dimension, so as to avoid guide crossing. For defining a LACIN of any *size*, two equivalent bi-dimensional structures can be used: the layout (Figure 1a) and the connection matrix (Figure 1b). In both figures, rows represent switches labeled from 0 to (*size* - 1), and columns represent ports, labeled from 0 to (*size* - 2). For example, in Figure 1, a 10-switch LACIN is represented. In other embodiments of the invention, the switches may have other "*size*" ports to connect servers. However, they are not represented in the figure, as they do not have any impact in the essential aspects of the claimed LACIN layout. The number of servers in this 10-switch LACIN is 100 (10x10). As previously disclosed, LACIN only connects pairs of switches through ports located at the same position on each switch (so as to avoid wire crossings), which characterizes the LACIN layout.

The method employed to generate the LACIN layout in Figure 1 is based on the fact that any even number can be decomposed as the product of a power of 2 times an odd number, that is, *size* = *b2^{a}.* Then, each number from 1 to *size*-1, when interpreted as a jump or increment, determines a cycle in the CIN, and, except in b cases, those cycles have even length greater than 2, and can be connected using the same two ports of different pairs of switches. If the jumps that induce cycles, either of length 2 or of odd length, are denoted as *j₁, ..., j_{b},* each port *p* of the remaining b ports connects the switch *p*+*kt* with the switch *p*+*kt*+*jₜ*, where *k* is a number from 1 to 2^{a-1}, *t* is a number from 1 to 2*b*, and we set *j*_{*b*+*t*} = *jₜ.*

When programmed, this method is very compact and has linear complexity on the number of ports of the CIN. Thus, it quickly generates LACIN layouts for any even number of switches of practical interest, regardless of its size.

### Example 2:

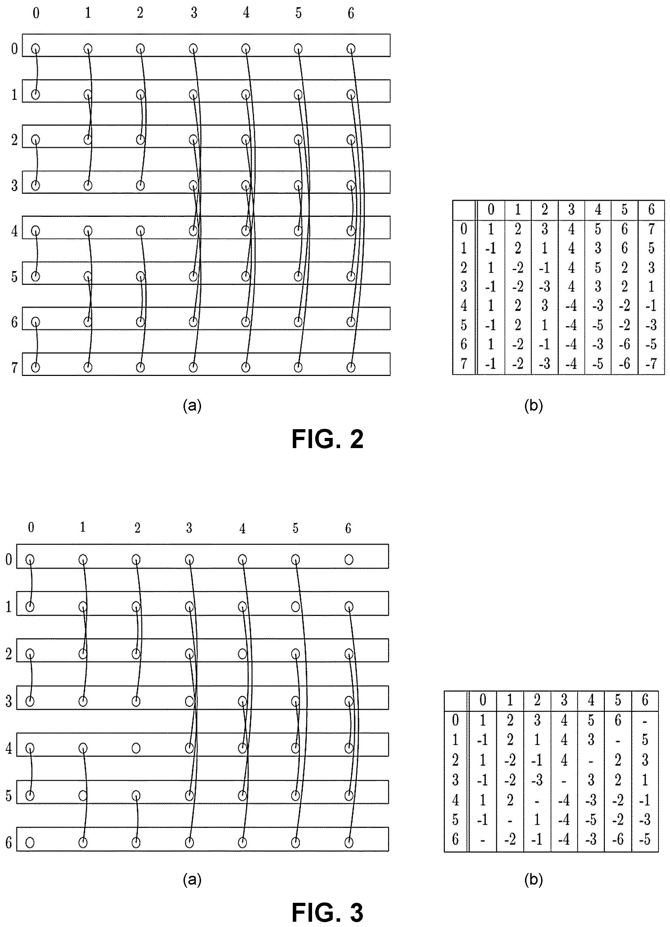

A case of particular interest is when the number of switches in a CIN is a power of two. For technical reasons, many interconnection networks employ such a restriction. In such cases, an alternative LACIN layout can be obtained. In Figures 2a-2b, a further XOR-based LACIN equipping 8 switches is represented, showing its layout and connection matrix, respectively. The number of servers in such 8-switch LACIN is 64 (8x8), and has the essential feature of connecting just aligned port switches, thereby avoiding wire crossing. However, it must be noted that the layout of this example is different than the one that would be produced by the method employed in Example 1, leading to Figure 1, and its generation method is much more compact and simpler, being thus advantageous, especially for networks with large numbers of servers. In this example, any pair of switches are linked using a wire that connects ports with index number equal to the bitwise exclusive-or of the index numbers of those switches minus 1 (assuming both indices start at 0, as in Figure 2). Observe that numbering the switches from 0 to N-1 (as in Figure 2), but the ports from 1 to N-1, instead of from 0 to N-2 (as in Figure 2), any pair of switches will be connected using the pair of ports whose index number is the bitwise exclusive-or operation of the index numbers of those switches.

### Example 3:

For the case of a LACIN with an odd number of switches, the procedure follows a similar layout as in Example 1 or 2, but applied for the next even integer. Once the layout is generated, the last switch and its corresponding links are removed, thereby achieving the desired configuration. Figures 3a-3b show, respectively, the layout and the connection matrix of a LACIN with seven switches, derived from the previous 8-switch LACIN in Figures 2a-2b.

### Example 4:

The previous LACIN constructions can be directly applied to implement stand-alone CINs of any size. However, when the number of servers grows, single CINs can no longer be employed as networks, since the number of ports of the switches is bounded by technological limitations, impeding their scalability. Recent popular diameter-3 networks built upon CINs, such as Dragonfly and Dragonfly+ (or Megafly), have been developed and sold by industry. Another interesting network is the 3D HyperX (or Flattened Butterfly). Such networks allow for a huge scalability at the expense of longer paths. The LACIN methodology described above can be used also for implementing the groups of a Dragonfly or one dimension of a HyperX inside the system's racks.

A 3D HyperX layout is defined in three dimensions (V, X, Y). Typically, the number (S) of switches per dimension is the same. Switches must divide their ports to connect to both servers and switches in the directions of (V, X, Y) dimensions. CINs of S switches are implemented in each of the three dimensions. Packets traveling between certain pairs of servers must cross up to the three dimensions, i.e. as many hops as the network diameter, which is three.

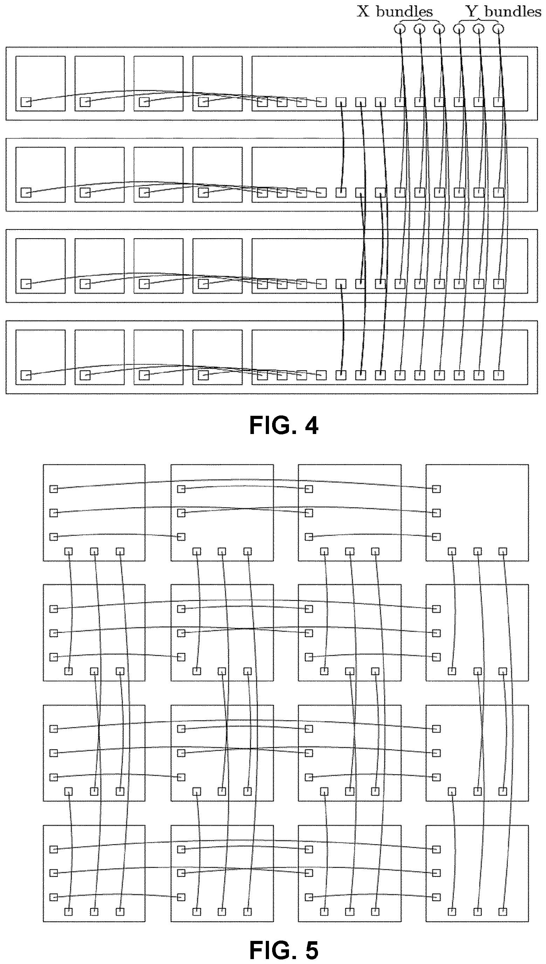

As a further exemplary embodiment of the invention, a small 4 × 4 × 4 HyperX network is depicted in Figure 4, wherein the dimension V is implemented inside the racks, and the whole network, composed of sixteen (4 × 4) racks, is shown in Figure 5, where it is assumed that each rack contains four switches and sixteen servers, as in Figure 4, which depicts its internal organization and wiring. On each of its four rows (or chassis), there are four servers, comprising a network interface card (NIC) each, and a switch. The servers are represented by the four big squares on the left part of Figure 4, while the small squares inside each server correspond to NICs. The four switches, represented by rectangles on the right part of Figure 4, have nine ports represented by nine small squares inside each switch. The first four ports of each switch connect the four NICs of the four servers in the chassis that inject/eject data packets on such switch, and this configuration is followed by each of the four chassis. The next three ports of each switch are employed for building the local 4-switch LACIN inside the rack in the direction of the V dimension. The six wires or links inside the rack are arranged according to the previous XOR-based LACIN proposal (as in Example 2). The next three ports of each switch are used for implementing the X dimension, and the same is done for dimension Y with the next three last ports. The four links attached to the switch ports of each one of the six columns, implementing dimensions X and Y, are grouped in six bundles or hoses of four wires. There are three X bundles for implementing the LACIN in the dimension X, and three Y bundles for implementing the LACIN in the dimension Y. Figure 5 depicts the whole HyperX network with a plant of sixteen (4x4) racks, implementing a 4-switch LACIN each. For each rack, there are three X plugs, or super-ports, to connect the X bundles of four wires, and the same approach is followed for dimension Y. Such super-ports are represented by small squares inside the racks. A LACIN methodology is employed to linearly arrange the bundles of wires between racks along the directions of X and Y dimensions, respectively. The final bundle LACIN layout is represented in Figure 5. Note that, in this case, there are only forty-eight (6x8) bundles of four wires each, and six internal V local wires per rack. As shown below, in Example 5, these numbers would scale up to 3840 (120x32) bundles of sixteen wires each, and 120 internal V local wires per rack in a larger 16×16×16 HyperX network connecting 65536 servers. This means 61440 wires organized in 3840 bundles for connecting racks, and 30720 (120x256) local wires inside the racks for implementing dimension V.

### Example 5:

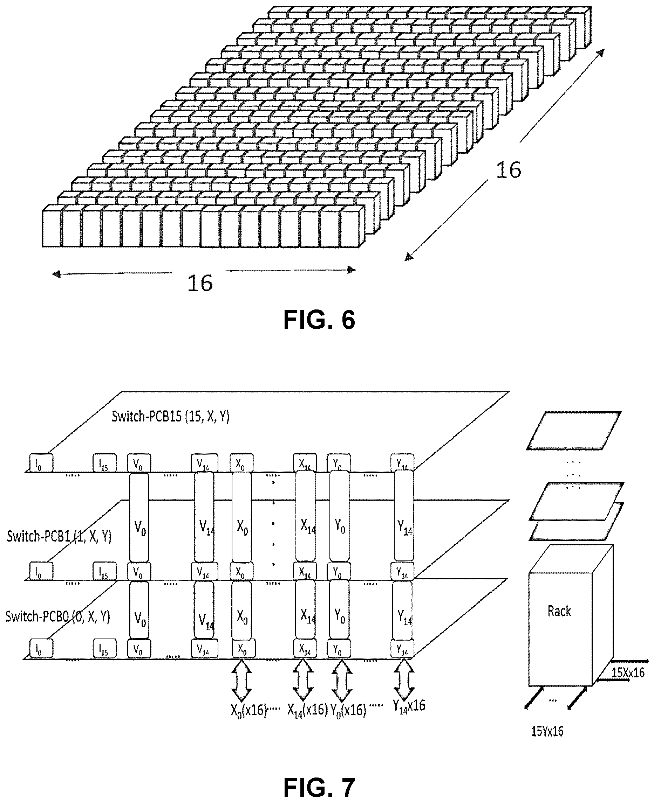

Following the same approach as in the previous examples, Figures 6-8 show different illustrations of a larger LACIN deployment of a three-dimensional (3D) HyperX network comprising an array of 16x16 racks arranged in the (X, Y) directions (see Figure 6). In this example, each rack is built of sixteen rack planes stacked in the V direction (see Figure 7), wherein each plane comprises a switch with sixteen injection/ejection ports, and wherein each port is connected to one of the sixteen servers. As a result, each rack comprises 16 switches and 16 × 16= 256 servers, and the whole system comprises 256 × 16 × 16 = 65536 servers and 4096 switches. Moreover, besides the sixteen injection/ejection ports, each switch must have at least fifteen V-ports (so as to vertically connect the sixteen switches in a LACIN on each rack), fifteen X-ports and fifteen Y-ports (so as to horizontally connect each rack with other racks in the (X, Y) array), with a total of 61 ports. In a preferred embodiment of the invention based on this example, standard 64-port switches can be used, where the free ports in each switch can be used for other purposes, such as fault-tolerance or upgrading. The connection of the switches requires, accordingly, 92160 wire connections. Note that these specific numbers are provided only for illustrative purposes, and other embodiments of the invention can comprise different configurations of racks planes or rack arrays, which are also considered within the scope of the invention.

According to this embodiment of the invention, Figure 7 shows a rack plane distribution in the V direction, forming a stack, wherein each rack plane represents a printed circuit board (PCB). The rack comprises sixteen switches (SWITCH-PCB₀...SWITCH-PCB₁₅), and each switch comprises sixteen injection/ejection ports (I₀...I₁₅), fifteen V-ports (V₀...V₁₄), fifteen X-ports (X₀...X₁₄) and fifteen Y-ports (Y₀...Y₁₄). As represented in the figure, the V-ports, X-ports and Y-ports in each rack plane are substantially aligned with the corresponding V-, X- and Y-ports in the other planes, such that the wiring connections between a given Vᵢ, Xᵢ or Yᵢ port in a rack plane and a different given port Vⱼ, Xⱼ or Yⱼ port in other rack plane of the same rack are substantially parallel to other wiring connections in the same rack and, preferably, substantially parallel to the V direction inside the rack, such that the wiring lines run without crossing with other wiring lines corresponding to different port connections.

As further disclosed in Figure 7, each of the fifteen X- and Y- bundles comprises sixteen wires (corresponding to the sixteen injection/ejection ports (I₀... I₁₅) in each PCB). These wires can, in different embodiments of the invention, be grouped in hoses.

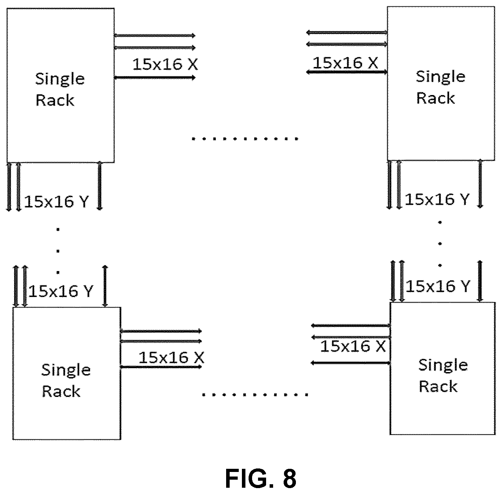

In further preferred embodiments of the invention, the same methodology can be applied to the wiring between racks, for organizing a whole server machine in the (3D) HyperX network. Under these embodiments (see Figure 8), the connections between different racks in the (X, Y) plane can also follow independent and substantially parallel lines, thereby avoiding wire crossing between different hoses. More preferably, the connections between racks can be arranged aerially or underfloor, thus providing with more space for carrying out installation, repair or maintenance operations in the network.

As disclosed in preceding sections, the layout design of the invention does not add complexity to the switch connection requirements. This feature is remarkable in HPC systems since, for large numbers of servers, the wiring costs, in meters of wire, are far lower than the costs of the switches and wire terminals. As a result, overall costs associated with the LACIN layouts of the invention are comparable to other CIN implementations. However, the proposed methodology substantially reduces wire connection complexity (which can be a severe problem in networks over hundreds or thousands of servers) compared to the prior art, and relaxes the need of applying complex wire labelling and coloring, as well as simplifying the operations of server replacement or repair inside the network.

## Claims

1. System for connecting a Complete Interconnection Network, CIN, wherein:
- the CIN comprises a plurality of servers arranged in a plurality of server groups;
- each server group is connected to a switch, wherein each switch comprises a plurality of ports comprising, in turn, at least a first port group for connecting the switch to a server group, and a second port group for connecting two server groups connected to different switches;
- switches are aligned along a dimension with their second port group substantially aligned in said dimension;
wherein the system is **characterized in that** each port in the second port group of every switch is connected to the same port in the second port group of a different switch, by means of a wire connection and, for any pair of switches, only pairs of ports that occupy identical positions according to a same index number are connected;
and wherein the wire connections connecting the ports of different switches are arranged in sets or guides of wires along the dimension in which switches are aligned, such that the wire sets do not cross.

2. System according to the preceding claim, wherein the CIN has a number of switches that is a power of two and, for a numbering of the switches and their ports, every pair of switches is linked through a single wire that connects a pair of ports whose index number is the bitwise exclusive-or operation of the index numbers of the switches being connected.

3. System according to any of the preceding claims, wherein the CIN forms part of a larger interconnection network which is not a CIN, but a topology in which wire connections are grouped as a CIN or a set of CINs.

4. System according to the preceding claim, wherein the topology is a 3-dimensional HyperX and comprises a lineal or matrix array of server racks arranged in substantially horizontal dimensions (X, Y), and, wherein each server rack comprises one or more server groups connected each to a connection switch composing a LACIN in a dimension (V).

5. System according to any of claims 3-4, wherein the topology comprises at least one of the following network topologies: Dragonfly, Dragonfly+, Megafly, Flattened Butterfly, HyperX.

6. System according to any of the preceding claims, wherein the inter-rack wires that connect ports in a set are bundled together in hoses.

7. System according to any of the preceding claims, wherein the interconnection topology is 1-dimensional, 2-dimensional or 3-dimensional.

8. System according to any of the preceding claims, wherein at least two switches are arranged in a server rack.

9. System according to the preceding claim, wherein the wire connections between the server racks are arranged underfloor or aerially substantially along at least a horizontal dimension (X, Y).

10. System according to any of the preceding claims, wherein the CIN is implemented as a Network-on-Chip.

11. System according to any of the preceding claims, wherein:
- at least a server group is connected to a connection switch through injection/ejection ports;
- at least a switch further comprises extra fault-tolerance or upgrading ports; and/or
- at least a server group and a switch are integrated in a printed circuit board, PCB.

12. System according to any of the preceding claims, wherein the wires are labelled by text or by coloring.

13. Method for connecting a Complete Interconnection Network, CIN, or a CIN portion of an interconnection network, in a system according to any of the preceding claims, comprising the following steps:
- arranging a plurality of servers in server groups,
- connecting each server group to a switch, wherein each switch comprises a plurality of ports comprising, in turn, at least a first port group for connecting the switch to a server group, and a second port group for connecting two server groups connected to different switches;
- switches are aligned along a dimension with their second port group substantially aligned in said dimension;
wherein the system is **characterized in that** each port in the second port group of every switch is connected to the same port in the second port group of a different switch, by means of a wire connection and, for any pair of switches, only pairs of ports that occupy identical positions according to a same index number are connected;
and wherein the wire connections connecting the ports of different switches are arranged in sets or guides of wires along the dimension in which switches are aligned, such that the wire sets do not cross.
